# EUROPÄISCHE PATENTSCHRIFT

(11) **EP 1 503 102 B1**
(45) Veröffentlichungstag und Bekanntmachung des Hinweises auf die Patenterteilung: **23.08.2006**
(21) Anmeldenummer: 04017133.2
(22) Anmeldetag: 21.07.2004
(51) Int. Cl.: F16F 1/32

(54) **Tellerfeder mit verbessertem Setzverhalten**
Belleville spring with improved performance under load
Ressort Belleville avec performance sous charge améliorée

(30) Priorität: 29.07.2003 DE 10334470
(43) Veröffentlichungstag der Anmeldung: 02.02.2005
(73) Patentinhaber: Muhr und Bender KG, 57439 Attendorn (DE)
(72) Erfinder: Muhr, Thomas, Dr., 57439 Attendorn (DE); Brenner, Harold, 57562 Sassenroth (DE); Hesselmann, Bernfried, Dr.-Ing., 57482 Wenden (DE); Rinsdorf, Andreas, Dr. -Ing., 57258 Freundenberg (DE); Schütz, Volker, 57567 Daaden (DE)
(74) Vertreter: Neumann, Ernst Dieter

(56) Entgegenhaltungen:
- WO-A-00/77367
- DE-A- 2 229 028
- DE-A- 2 543 693
- DE-A- 4 444 649
- DE-A- 19 805 797
- PATENT ABSTRACTS OF JAPAN Bd. 2000, Nr. 04, 31. August 2000 (2000-08-31) & JP 2000 027915 A (NABCO LTD), 25. Januar 2000 (2000-01-25)

## Beschreibung

Die Erfindung betrifft eine Tellerfeder von im wesentlichen kreisringförmiger Form mit einer im wesentlichen außenkonischen Oberseite und einer im wesentlichen innenkönischen Unterseite, zwischen denen jeweils eine äußere Ringkante und eine innerre Ringkante liegen, sowie Verfahren zur Herstellung von Tellerfedern. Tellerfedern haben bei äußerst kurzer Baulänge üblicherweise steile Federkennlinien, d. h. daß sie hohe Rückstellkräfte bei geringem Federweg aufbringen. Sie werden häufig als Federpakete mit übereinstimmender oder wechselnder Konuslage aber auch als Einzelfederelemente z. B. als Kupplungsdruckfedern in Kraftfahrzeugen oder als Kolbenrückstellfedern in Automatikgetrieben verwendet.

Das Einbringen von Druckeigenspannungen bzw. Druckvorspannungen zur Steigerung: der Dauerfestigkeit von Tellerfedern ist allgemein bekannt. In der industriellen Praxis wird dies üblicherweise durch Kugelstrahlen der Tellerfeder realisiert. Hierfür stehen unterschiedliche Kugelstrahlverfahren zur Verfügung, beispielsweise das Schleuderstrahlen (Trommelstrahlen) oder das Injektorstrahlen (Kugelstrahlen mittels Luftdüsen). Das erstgenannte Verfahren eignet sich insbesondere zur Behandlung von Schüttgut, also z. B. von Tellerfedern geringeren Durchmessers von wenigen mm, während das zweitgenannte Verfahren für größere Einzelteile, also beispielsweise von Tellerfender mit Durchmesser von mehreren 100 mm geeignet ist. Bei diesen Behandlungsverfahren wird angestrebt, eine möglichst gleichmäßige Verdichtung sämtlicher Oberflächen zu erzielen. Hieraus ergeben sich gleichmäßige Eigendruckvorspannungen in allen Randschichten des Bauteils. Mit Randschicht ist hierbei die von dem Verdichtungsprozeß erfaßte Oberflächenschicht des Bauteils gemeint

Aus der DE 25 43 693 A1 ist eine tellerförmige Membranfeder zur Verwendung in Kraftfährzeugkupplungen bekannt, die am Innenrand radiale Federzungen aufweist. Nach einer Wärmebehandlung der gesamten Membranfeder soll ausschließlich die innenkonische Unterseite einem Kugelstrahlen (Shot Peening) unterzogen werden, nicht jedoch die außenkonische Oberseite. Gegebenenfalls soll eine weitere Wärmebehandlung an der vorgespannten Membranfeder sich daran anschließen.

Aus der DE 198 05 797 A1 ist ein Verfahren zur Herstellung einer Tellerfeder mit einem geschlossen ringförmigen Bereich und daran innen anschließenden von Schiitzen getrennten radialen Hebelbereichen bekannt. Nach einem mehrstufigen Wärmebehandlungsverfahren wird die innenkonische Unterseite des ringförmigen Bereichs unter Ausschluß der Hebelbereiche einem Kugelstrahlen unterzogen, jedoch nicht die gesamte Oberfläche, sondern nur zwei ringförmige Bereiche, von denen einer durch die radiale Außenkante beschränkt ist und der andere etwa durch den Ansatz der Hebelbereiche, wobei zwischen beiden ein ringförmiger Mittelbereich vom Kugelstrahlen freigehalten wird.

In der DE 44 44 649 A1 sind verschiedene Verfahren zur Behandlung von Tellerfedern beschrieben, unter anderem ein unterschiedlich intensives Kugelstrahlen von Oberseite und Unterseite, wobei zum Ausgleich von Streuungseffekten die Prozeßparameter abhängig von Materialdicke, Gewicht oder dergleichen variiert werden können. Daneben wird eine differenzierte Wärmebehandlung des ringförmigen Bereiche unter Ausschluß der innenliegenden radialen Federzungen als vorteilhaft benannt

Tellerfedern der hiermit genannten Art haben wie allgemein bekannt, ein Setzungsverhalten, d. h. einen relaxationsbedingten Kraftabfall über der Zeit, bzw. über der Zahl der Belastungsspiele. Um über der Lebensdauer die gewünschten Kennlinien einhalten zu können, sind die Tellerfedern daher mit zunächst überhöhter Vorspannung einzubauen, was zu einer anfänglich überharten Betätigung der entsprechenden Funktionsteile führt, oder mit einer Nachstellmöglichkeit für ihre Anschläge zu versehen, wodurch die entsprechenden Konstruktionen verteuert werden.

Hiervon ausgehend liegt der vorliegenden Erfindung die Aufgabe zugrunde, Tellerfedern bereitzustetten, die ein verbessertes Relaxationsverhalten zeigen sowie Verfahren zur Herstellung solcher Tellerfedern vorzuschlagen

Die Lösung besteht in einer Tellerfeder der genannten Art, bei der im unbelasteten Zustand die Randschicht der Unterseite sowie jeweils die Randschicht der äußeren Ringkante und der inneren Ringkante eine höhere Eigendruckspannung aufweist als die Randschicht der Oberseite. Hiermit wird vermieden, daß an der bei Druckbelastung der Tellerfeder auf Druck belasteten Oberseite derselben durch eine aufgeprägte Eigendruckvorspannung ein besonders starkes Setzungsverhalten eintritt, wie es bei Tellerfedern nach dem Stand der Technik eintritt. Die erfindungsgemäßen Tellerfedern, bei denen die Randschicht der Oberseite im unbelasteten Zustand allenfälls eine aufgrund üblicher Wärmebehandlung vorliegende geringe Eigendruckvorspannung aufweist oder vorzugsweise eigendruckspannungsfrei ist oder infolge eines üblichen Vorsetzungsschrittes (Plandrücken nach der Wärmebehandlung) eine Eigenzugvorspannung aufweist, weisen damit ein wesentlich besseres Setzungsverhätteih auf, das nach kürzerer Zeit und/oder geringeren Verlusten im Kraft-Weg-Diagramm abgeschlossen ist bzw. sich soweit verliert, daß es keinen weiteren nächteiligen Folgen mehr hat. An der auf Zug belasteten Unterseite der Tellerfeder sowie jeweils an der äußeren Ringkante und der inneren Ringkante ist dagegen das Vorliegen einer Eigendruckvorspannung in der Randschicht im Sinne eines geringeren Setzungsverhaltens gerade positiv.

Arbeitsgänge im Fertigungsprozeß, die auf die Reduzierung des Setzverlustes der Tellerfeder im Betrieb hinzielen, können so im Umfang verringert oder sogar eingespart werden. Als weiterer Vorteil ergibt sich die Möglichkeit, die Tellerfeder aufgrund ihres geringeren Setzungsverlustes im Betrieb bereits im Vorfeld auf ein niedrigeres Kraftniveau auszulegen. Damit ergibt sich die Möglichkeit, eine geringer dimensionierte Tellerfeder in einem kleineren Bauraum bei gegebenen Anforderungen zu verwenden.

In bevorzugter Ausführung werden im unbelasteten Zustand die Randschichten der äußeren Ringkante und der inneren Ringkante die gleiche erhöhte Eigendruckvorspannung aufweisen, wie die Randschicht der Unterseite.

Die erfindungsgemäßen Tellerfedern können mit ununterbrochen kreisförmigen äußieren und inneren Ringkanten ausgebildet sein oder eine äußere kreisringförmige Ringkante haben und von der inneren Ringkante ausgehende radiale Schlitze aufweisen oder eine innere kreisringförmige Ringkante haben und von der äußeren Ringkante ausgehende radiale Schlitze aufweisen.

Ein erstes erfindungsgemäßes Verfahren zur Herstellung der genannten Tellerfedern, bei dem nach der Formgebung und Wärmebehandlung die Randschicht der Unterseite einem mechanischen Verdichtungsverfahren zur Erzeugung einer Eigendruckvorspannung unterzogen wird, von dem die Randschicht der Oberseite freigehalten wird, ist dadurch gekennzeichnet, daß die Randschicht der äußeren und inneren Ringkanten dem gleichen mechanischen Verdichtungsverfahren unterzogen werden, wie die Randschicht der Unterseite. Bei dem hier genannten Verfahren handelt es sich insbesondere um die eingangs genannten Kugelstrahlverfahren, die hierbei nur bei fixierter Tellerfeder mit gerichteter Strahlrichtung zur Anwendung kommen müssen.

Ein zweites erfindungsgemäßes Verfahren ist dadurch gekennzeichnet, daß nach der Formgebung und Wärmebehandlung die Randschicht der Unterseite einem weiteren Wärmebehandlungsschritt zur Erzeugung einer Eigendruckvorspannung unterzogen wird, von dem die Randschicht der Oberseite freigehalten wird, wobei in das Behandlungsverfahren der Unterseite die äußere und innere Ringkante einbezogen werden. Als entsprechende zusätzliche Wärmebehandlungsschritte kommen solche in Frage, die zu einem Materialwachstum in der entsprechenden Randschicht führen und von denen einzelne Oberflächenteile, nämlich hier die Oberseite, freigehalten werden können. Dies können bestimmte Laserwärmebehandlungsverfahren oder Nitrierhärteverfahren sein.

Bevorzugte Ausführungsbeispiele der Erfindung sind in den Zeichnungen dargestellt und werden nachstehend beschrieben.
- Figur 1: zeigt eine erfindungsgemäße Tellerfeder in einer ersten Ausführung
a) im Längsschnitt
b) in einer vergrößerten Einzelheit aus Figur 1a
c) in Ansicht;
- Figur 2: zeigt eine erfindungsgemäße Tellerfeder in einer zweiten Ausführung
a) im Längsschnitt
b) in einer vergrößerte Einzelheit aus Figur 2a
c) in Ansicht;
- Figur 3: zeigt eine erfindungsgemäße Tellerfeder in einer dritten Ausführung
a) im Längsschnitt
b) in einer vergrößerte Einzelheit aus Figur 3a
c) in Ansicht.

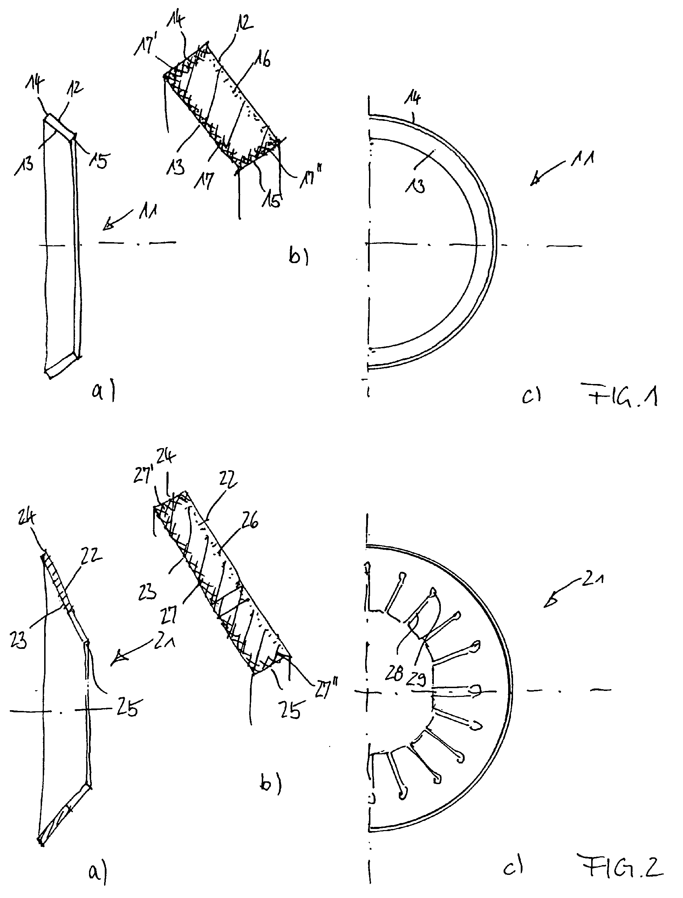

Die einzelnen Darstellungen der Figur 1 werden nachstehend gemeinsam beschrieben. An einer kreisringförmigen Tellerfeder von im wesentlichen gleichförmiger Materialstärke und konischer Grundform sind eine außenkonische Oberseite 12 und eine innenkonische Unterseite 13, eine äußere Ringkante 14 und eine innere Ringkante 15 zu unterscheiden. Tellerfedern dieser Art werden häufig in Form von Tellerfederpaketen mit übereinstimmender Konuslage oder wechselnder Konuslage zur Erzeugung hoher axialer Federkräfte verwendet. Wie ausschließlich in der Darstellung b erkennbar ist, hat die erfindungsgemäße Tellerfeder an der Unterseite 13 sowie an den äußeren und inneren Ringkanten 14, 15 durch Kreuzschraffur dargestellte Randschichten 17, 17', 17" mit erhöhter Eigendruckvorspannung, während die Oberseite 12 eine durch Punktierung dargestellte Randschicht 16 aufweist, die eine geringere Eigendruckvorspannung aufweist als die Randschichten 17, 17', 17". Die Eigenschaften der Randschicht 16 ergeben sich aufgrund der üblichen Wärmebehandlung und Vorsetzbehandlung von Tellerfedern. Demgegenüber ist die Eigendruckvorspannung der Randschicht 17 durch mechanische Verdichtungsverfahren oder zusätzliche Wärmebehandlungsschritte erhöht.

Die einzelnen Darstellungen der Figur 2 werden nachstehend gemeinsam beschrieben. An einer kreisringförmigen Tellerfeder von im wesentlichen gleichförmiger Materialstärke und konischer Grundform sind eine außenkonische Oberseite 22 und eine innenkonische Unterseite 23, eine äußere Ringkante 24 und eine innere Ringkante 25 zu unterscheiden. Von der inneren Ringkante 25 gehen radial verlaufende Schlitze 28 aus, die jeweils etwa auf mittlerem Durchmesser der Tellerfeder in einer Spannungsentlastungsrundung 29 enden. Tellerfedern dieser Art sind in Fahrzeugkupplungen weit verbreitet im Einsatz. Wie ausschließlich in der Darstellung b erkennbar ist, hat die erfindungsgemäße Tellerfeder an der Unterseite 23 sowie an den äußeren und inneren Ringkanten 24, 25 durch Kreuzschraffur dargestellte Randschichten 27, 27', 27" mit erhöhter Eigendruckvorspannung, während die Oberseite 12 eine durch Punktierung dargestellte Randschicht 26 aufweist, die eine geringere Eigendruckvorspannung aufweist als die Randschicht 27. Die Eigenschaften der Randschicht 26 ergeben sich aufgrund der üblichen Wärmebehandlung und Vorsetzbehandlung von Tellerfedern. Demgegenüber ist die Eigendruckvorspannung der Randschichten 27, 27', 27" durch mechanische Verdichtungsverfahren oder zusätzliche Wärmebehandlungsschritte erhöht.

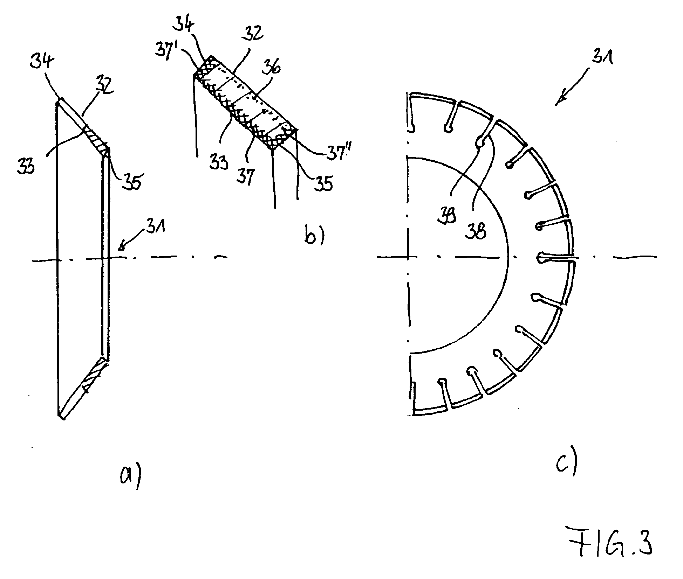

Die einzelnen Darstellungen der Figur 3 werden nachstehend gemeinsam beschrieben. An einer kreisringförmigen Tellerfeder von im wesentlichen gleichförmiger Materialstärke und konischer Grundform sind eine außenkonische Oberseite 32 und eine innenkonische Unterseite 33, eine äußere Ringkate 34 und eine innere Ringkante 35 zu unterscheiden. Von der äußeren Ringkante 34 gehen radial verlaufende Schlitze 38 aus, die jeweils etwa auf mittlerem Durchmesser der Tellerfeder in einer Spannungsentlastungsrundung 39 enden. Wie ausschließlich in der Darstellung b erkennbar ist, hat die erfindungsgemäße Tellerfeder an der Unterseite 33 sowie an den äußeren und inneren Ringkanten 34, 35 durch Kreuzschraffur dargestellte Randschichten 37, 37', 37" mit erhöhter Eigendruckvorspannung, während die Oberseite 32 eine durch Punktierung dargestellte Randschicht 36 aufweist, die eine geringere Eigendruckvorspannung aufweist als die Randschicht 37 oder eine Eigenzugvorspannung. Die Eigenschaften der Randschicht 36 ergeben sich aufgrund der üblichen Wärmebehandlung und Vorsetzbehandlung von Tellerfedern. Demgegenüber ist die Eigendruckvorspannung der Randschicht 37 durch mechanische Verdichtungsverfahren oder zusätzliche Wärmebehandlungsschritte erhöht.

Die Tellerfedern nach den Figuren 1 bis 3 werden zur Herstellung üblicherweise aus Blech als Kreisring ausgeformt und zur konischen Form verformt. Danach werden sie wärmebehandelt und oberflächenbehandelt. Schließlich erfolgt ein Vorsetzen, bei dem die Tellerfedern unter Überschreiten der Streckgrenze und plastischer Verformung einmal plangedrückt werden. Hierbei können Zugeigenspannungen auf der Oberseite bestehen bleiben.

### Bezugszeichenliste

- 11: Tellerfeder
- 12: Oberseite
- 13: Unterseite
- 14: äußere Ringkante
- 15: innere Ringkante
- 16: Randschicht
- 17: Randschicht

- 21: Tellerfeder
- 22: Oberseite
- 23: Unterseite
- 24: äußere Ringkante
- 25: innere Ringkante
- 26: Randschicht
- 27: Randschicht
- 28: Schlitz
- 29: Rundung

## Patentansprüche

1. Tellerfeder von im wesentlichen kreisringförmiger Form mit einer im wesentlichen außenkonischen Oberseite (12, 22, 32) und einer im wesentlichen innenkonischen Unterseite (13, 23, 33), zwischen denen jeweils eine äußere Ringkante (14, 24, 34) und eine innere Ringkante (15, 25, 35) liegen,
wobei im unbelasteten Zustand die Randschicht (17, 27, 37) der Unterseite (13, 23, 33) eine höhere Eigendruckspannung aufweist als die Randschicht (16, 26, 36) der Oberseite (12, 22, 32),
**dadurch gekennzeichnet,**
**daß** im unbelasteten Zustand die Randschicht (17, 27, 37) der äußeren Ringkante (14, 24, 34) und der inneren Ringkante (15, 25, 35) eine höhere Eigendruckspannung aufweisen als die Randschicht (16, 26, 36) der Oberseite (12, 22, 32).

2. Tellerfeder nach Anspruch 1,
**dadurch gekennzeichnet,**
**daß** im unbelasteten Zustand die Randschicht (16, 26, 36) der Oberseite (12, 22, 32) eigendruckspannungsfrei oder eigenzugspannungsbehaftet ist.

3. Tellerfeder nach einem der Ansprüche 1 oder 2,
**dadurch gekennzeichnet,**
**daß** im unbelasteten Zustand die Randschichten (17, 27, 37) der Unterseite (13, 23, 33) sowie die Randschichten (17', 27', 37', 17", 27", 37") der äußeren und inneren Ringkanten (14, 24, 34, 15, 25, 35) im wesentlichen die gleiche erhöhte Eigendruckspannung aufweisen.

4. Tellerfeder nach einem der Ansprüche 1 bis 3,
**dadurch gekennzeichnet,**
**daß** die äußere Ringkante (14) und die innere Ringkante (15) ununterbrochen kreisringförmig sind.

5. Tellerfeder nach einem der Ansprüche 1 bis 3,
**dadurch gekennzeichnet,**
**daß** eine der Ringkanten (24, 35) kreisringförmig ist und von der anderen Ringkante (25, 34) radial verlaufende Schlitze (28, 38) begrenzter Länge ausgehen.

6. Verfahren zur Herstellung einer Tellerfeder von im wesentlichen kreisringförmiger Form mit einer im wesentlichen außenkonischen Oberseite (12, 22, 32) und einer im wesentlichen innenkonischen Unterseite (13, 23, 33), zwischen denen jeweils eine äußere Ringkante (14, 24, 34) und eine innere Ringkante (15, 25, 35) liegen,
wobei nach der Formgebung und Wärmebehandlung die Randschicht (17, 27, 37) der Unterseite (13, 23, 33) einem mechanischen Verdichtungsverfahren zur Erzeugung einer Eigendruckvorspannung unterzogen wird, von dem die Randschicht (16, 26, 36) der Oberseite (12, 22, 32) freigehalten wird,
**dadurch gekennzeichnet,**
**daß** die Randschichten (17', 27', 37') der inneren und äußeren Ringkanten (14, 15, 24, 25, 34, 35) dem gleichen mechanischen Verdichtungsverfahren unterzogen werden, wie die Randschicht (17, 27, 37) der Unterseite (13, 23, 33).

7. Verfahren zur Herstellung einer Tellerfeder von im wesentlichen kreisringförmiger Form mit einer im wesentlichen außenkonischen Oberseite (12, 22, 32) und einer im wesentlichen innenkonischen Unterseite (13, 23, 33), zwischen denen jeweils eine äußere Ringkante (14, 24, 34) und eine innere Ringkante (15, 25, 35) liegen,
**dadurch gekennzeichnet,**
**daß** nach der Formgebung und Wärmebehandlung die Randschicht (17, 27, 37) der Unterseite (13, 23, 33) einem weiteren Wärmebehandlungsschritt zur Erzeugung einer Eigendruckspannung unterzogen wird, von dem die Randschicht (16, 26, 36) der Oberseite (12, 22, 32) freigehalten wird, und daß die Randschichten (17', 27', 37') der äußeren und inneren Ringkanten (14, 15, 24, 25, 34, 35) dem gleichen weiteren Wärmebehandlungsschritt unterzogen werden wie die Randschicht (17, 27, 37) der Unterseite (13, 23, 33).

8. Verfahren nach Anspruch 6,
**dadurch gekennzeichnet,**
**daß** als Verdichtungsverfahren ein Kugelstrahlverfahren verwendet wird.

9. Verfahren nach Anspruch 7,
**dadurch gekennzeichnet,**
**daß** als weiterer Wärmebehandlungsschritt ein Laserhärteverfahren oder Nitrierverfahren verwendet wird.

## Claims

1. A Belleville spring washer of a substantially circular shape having a substantially externally conical upper side (12, 22, 32) and a substantially internally conical underside (13, 23, 33) between which there are positioned an outer annular edge (14, 24, 34) and an inner annular edge (15, 25, 35), wherein, in the unloaded condition the surface layer (17, 27, 37) of the underside (13, 23, 33) comprises a higher internal compressive stress than the surface layer (16, 26, 36) of the upper side (12, 22, 32),
**characterised in**
**that**, in the unloaded condition, the surface layers (17, 27, 37) of the outer annular edge (14, 24, 34) and of the inner annular edge (15, 25, 35) comprise a higher internal compressive stress than the surface layer (16, 26, 36) of the upper side (12, 22, 32).

2. A Belleville spring washer according to claim 1,
**characterised in**
**that**, in the unloaded condition, the surface layer (16, 26, 36) of the upper side (12, 22, 32) is either free from an internal compressive stress or subject to an internal tensile stress.

3. A Belleville spring washer according to any one of claims 1 or 2,
**characterised in**
**that**, in the unloaded condition, the surface layers (17, 27, 37) of the underside (13, 23, 33) as well as the surface layers (17', 27', 37'; 17", 27", 37") of the outer and inner annular edges (14, 24, 34; 15, 25, 35) substantially comprise the same increased internal compressive stress.

4. A Belleville spring washer according to any one of claims 1 to 3,
**characterised in**
**that** the outer annular edge (14) and the inner annular edge (15) are continuously circular.

5. A Belleville spring washer according to any one of claims 1 to 3,
**characterised in**
**that** one of the annular edges (24, 35) is circular and that from the other annular edge (25, 34) there start radially extending slots (28, 38) of a delimited length.

6. A process of producing a Belleville spring washer of a substantially circular shape having a substantially externally conical upper side (12, 22, 32) and a substantially internally conical underside (13, 23, 33) between which there are positioned an outer annular edge (14, 24, 34) and an inner annular edge (15, 25, 35), wherein after the forming and heat treatment operations, for the purpose of generating an internal compressive pre-stress, the surface layer (17, 27, 37) of the underside (13, 23, 33) is subjected to a mechanical compaction operation of which the surface layer (16, 26, 36) of the upper side (12, 22, 23) is kept free,
**characterised in**
**that** the surface layers (17', 27', 37') of the inner and outer annular edges (14, 15, 24, 25, 34, 35) are subjected to the same mechanical compaction process as the surface layer (17, 27, 37) of the underside (13, 23, 33).

7. A process of producing a Belleville spring washer of a substantially circular shape having a substantially externally conical upper side (12, 22, 32) and a substantially internally conical underside (13, 23, 33) between which there are positioned an outer annular edge (14, 24, 34) and an inner annular edge (15, 25, 35),
**characterised in**
**that**, after the forming and heat treatment operations, the surface layer (17, 27, 37) of the underside (13, 23, 33) is subjected to a further heat treatment stage for generating an internal compressive stress of which the surface layer (16, 26, 36) of the upper side (12, 22, 32) is kept free and that the surface layers (17', 27', 37') of the outer and inner annular edges (14, 15, 24; 25, 34, 35) are subjected to the same further heat treatment stage as the surface layer (17, 27, 37) of the underside (13, 23, 33).

8. A process according to claim 6,
**characterised in**
**that** the compaction process is used in the form of a shot blasting process.

9. A process according to claim 7,
**characterised in**
**that** a laser hardening process or a nitriding process is used as the further heat treatment stage.

## Revendications

1. Ressort à disque en forme sensiblement de bague circulaire avec un côté supérieur (12, 22, 32), sensiblement conique extérieur et un côté inférieur (13, 23, 33) sensiblement conique intérieur, entre lesquels sont disposées respectivement une arête de bague (14, 24, 34) extérieure et une arête de bague (15, 25, 35) intérieure,
la couche de bordure (17, 27, 37) du côté inférieur (13, 23, 33) présentant une tension de pression propre plus élevée que la couche de bordure (16, 26, 36) du côté supérieur (12, 22, 32) dans l'état non chargé,
**caractérisé en ce que**,
dans l'état chargé, la couche de bordure (17, 27, 37) de l'arête de bague (14, 24, 34) extérieure et de l'arête de bague (15, 25, 35) intérieure présentent une tension de pression propre plus élevée que la couche de bordure (16, 26, 36) du côté supérieur (12, 22, 32).

2. Ressort à disque selon la revendication 1,
**caractérisé en ce que**,
dans l'état non chargé, la couche de bordure (16, 26, 36) du côté supérieur (12, 22, 32) est exempte de tension de pression propre ou exposée à une tension de traction propre.

3. Ressort à disque selon l'une quelconque des revendications 1 ou 2,
**caractérisé en ce que**,
dans l'état non chargé, les couches de bordure (17, 27, 37) du côté inférieur (13, 23, 33) et les couches de bordure (17', 27', 37', 17", 27", 37") des arêtes de bague (14, 24, 34, 15, 25, 35) extérieures et intérieures présentent sensiblement la même tension de pression propre élevée.

4. Ressort à disque selon l'une quelconque des revendications 1 à 3,
**caractérisé en ce que**
l'arête de bague (14) extérieure et l'arête de bague (15) intérieure présentent de façon continue une forme de bague circulaire.

5. Ressort à disque selon l'une quelconque des revendications 1 à 3,
**caractérisé en ce que**
l'une des arêtes de bague (24, 35) a une forme de bague circulaire et des fentes (28, 38) agencées radialement de longueur définie partent de l'autre arête de bague (25, 34).

6. Procédé pour la fabrication d'un ressort à disque présentant sensiblement une forme de bague circulaire avec un côté supérieur (12, 22, 32) sensiblement conique extérieur et un côté intérieur (13, 23, 33) sensiblement conique intérieur entre lesquels se situent une arête de bague (14, 24, 34) extérieure et une arête de bague (15, 25, 35) intérieure,
la couche de bordure (17, 27, 37) du côté inférieur (13, 23, 33) étant soumise à un procédé de compression mécanique pour générer une pré-tension de pression propre après le formage et le traitement thermique, procédé duquel est exempte la couche de bordure (16, 26, 36) du côté supérieur (12, 22, 32),
**caractérisé en ce que**
les couches de bordure (17', 27', 37') des arêtes de bague (14, 15, 24, 25, 34, 35) intérieures et extérieures sont soumises au même procédé de compression mécanique que la couche de bordure (17, 27, 37) du côté inférieur (13, 23, 33).

7. Procédé pour la fabrication d'un ressort à disque présentant sensiblement une forme de bague circulaire avec un côté supérieur (12, 22, 32) sensiblement conique extérieur et un côté intérieur (13, 23, 33) sensiblement conique intérieur, entre lesquels sont disposées une arête de bague (14, 24, 34) extérieure et une arête de bague (15, 25, 35) intérieure,
**caractérisé en ce que**,
après le formage et le traitement thermique, la couche de bordure (17, 27, 37) du côté intérieur (13, 23, 33) est exposée à une autre étape de traitement thermique pour générer une tension de pression propre, de laquelle est exempte la couche de bordure (16, 26, 36) du côté supérieur (12, 22, 32), et **en ce que** les couches de bordure (17', 27', 37') des arêtes de bague (14, 15, 24, 25, 34, 35) extérieures et intérieures sont soumises à la même autre étape de traitement thermique que la couche de bordure (17, 27, 37) du côté inférieur (13, 23, 33).

8. Procédé selon la revendication 6,
**caractérisé en ce que**
un procédé de grenaillage est utilisé comme procédé de compression.

9. Procédé selon la revendication 7,
**caractérisé en ce que**
un procédé de dureté par laser ou un procédé de nitruration est utilisé comme autre étape de traitement thermique.
